(19) Europäisches Patentamt
European Patent Office
Office européen des brevets

(11) **EP 2 426 433 A2**

(12) **EUROPEAN PATENT APPLICATION**

(43) Date of publication:
**07.03.2012 Bulletin 2012/10**

(51) Int Cl.:
**F25B 1/053** (2006.01) **F25B 49/02** (2006.01)

(21) Application number: **11156635.2**

(22) Date of filing: **02.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.09.2010 JP 2010195659**

(71) Applicant: **Mitsubishi Heavy Industries, Ltd.**
**Tokyo 108-8215 (JP)**

(72) Inventors:
• **Togano, Yoshie**
**Tokyo 108-8215 (JP)**
• **Ueda, Kenji**
**Tokyo 108-8215 (JP)**
• **Matsuo, Minoru**
**Tokyo 108-8215 (JP)**

(74) Representative: **Intès, Didier Gérard André et al**
**Cabinet Beau de Loménie**
**158, rue de l'Université**
**75340 Paris Cedex 07 (FR)**

(54) **Performance evaluation device for centrifugal chiller**

(57)    Enhanced accuracy in performance evaluation of a centrifugal chiller is achieved. Provided is a performance evaluation device for a centrifugal chiller, which includes an input unit (101) that receives operating data of the centrifugal chiller; a data classifying unit (102) that acquires evaluated data to be subjected to performance evaluation from the operating data received by the input unit (101) and classifies the evaluated data into multiple groups on the basis of a preset classifying condition; a smoothing unit (103) that smoothes the evaluated data, for each of the groups classified by the data classifying unit (102), by using a predetermined calculation method set in advance so as to obtain an evaluated value; and an evaluation unit (104) that performs performance evaluation for each group by using the evaluated value obtained by the smoothing unit (103) and a reference evaluation value that is set in advance or calculated using the operating data.

FIG. 2

<u>74</u>

**Description**

BACKGROUND OF THE INVENTION

1. FIELD OF THE INVENTION

The present invention relates to performance evaluation devices for centrifugal chillers.

2. DESCRIPTION OF RELATED ART

In the related art, a known method for diagnosing the performance of a centrifugal chiller used in a heat source system for an air conditioner in a building or the like is, for example, the method disclosed in Japanese Unexamined Patent Application, Publication No. Hei 4-93567. Japanese Unexamined Patent Application, Publication No. Hei 4-93567 discloses a centrifugal chiller-performance diagnosis device that receives various data, including the input power of the centrifugal chiller, the cooling capacity, the cooling water inlet temperature, the cooling water flow rate, and the condenser pressure, calculates an estimate value of the condenser pressure from the refrigeration characteristics of the centrifugal chiller on the basis of the received centrifugal chiller data, and compares the estimated condenser pressure value with an input actually-measured condenser pressure value so as to diagnose whether or not the performance has deteriorated.

However, because the diagnosis of whether or not the performance has deteriorated is performed by using an instantaneous value in the method disclosed in Japanese Unexamined Patent Application, Publication No. Hei 4-93567, if the operation is unstable, such as during a transitional period, there is a problem in that the diagnosis is susceptible to measurement errors, leading to reduced accuracy in the diagnosis.

BRIEF SUMMARY OF THE INVENTION

The present invention has been made in view of these circumstances, and an object thereof is to provide a performance evaluation device for a centrifugal chiller that can achieve enhanced accuracy in performance evaluation of a centrifugal chiller.

In order to solve the aforementioned problem, the present invention employs the following solutions.

One aspect of the present invention provides a performance evaluation device for a centrifugal chiller, which includes an input unit that receives operating data of the centrifugal chiller; a data classifying unit that acquires evaluated data to be subjected to performance evaluation from the operating data received by the input unit and classifies the evaluated data into multiple groups on the basis of a preset operating condition; a smoothing unit that smoothes the evaluated data, for each of the groups classified by the data classifying unit, by using a predetermined calculation method set in advance so as to obtain an evaluated value; and an evaluation unit that performs performance evaluation for each group by using the evaluated value obtained by the smoothing unit and a reference evaluation value that is set in advance or calculated using the operating data.

With the above aspect, the evaluated data is extracted from the operating data received via the input unit, and the extracted evaluated data is classified into multiple groups on the basis of the preset operating condition. The evaluated data classified into each group is smoothed, and the performance evaluation is performed for each group using the smoothed evaluated data. Performing the performance evaluation for each group in this manner allows for performance evaluation for each collection of evaluated values that have the same trends. Normally, an operating condition in which the operation frequency is high or a time during which performance deterioration tends to occur varies depending on where the centrifugal chiller is installed. Therefore, by classifying the evaluated data into multiple groups in accordance with the operating condition and performing the performance evaluation for each group, the trend of performance deterioration in individual centrifugal chillers can be ascertained in more detail. Furthermore, by reflecting the performance evaluation result in subsequent performance evaluation, the performance of the individual centrifugal chillers can be properly evaluated.

Even in a transitional period in which the load factor varies, the use of the evaluated value, obtained by smoothing the evaluated data, for performing the performance evaluation can avoid reduced accuracy in the performance evaluation caused by fluctuations in the operating data occurring due to the variation of the load factor.

The evaluated data may be data directly extracted from the operating data or may be data calculated by substituting the operating data into a predetermined arithmetic equation. An example of evaluated data is a coefficient of performance (COP). The reference evaluation value is, for example, a target value for the evaluated data and is set in accordance with the evaluated data. For example, in the case where the evaluated data is a coefficient of performance (COP), an example of reference evaluation value is a planned COP corresponding to a maximum COP that can be exhibited by the centrifugal chiller in terms of performance.

In the present invention, the term "centrifugal chiller" includes auxiliary equipment, such as a chilled water pump, a cooling water pump, and a cooling tower.

In the aforementioned performance evaluation device for a centrifugal chiller, the data classifying unit may classify the evaluated data into the multiple groups in accordance with a load factor or a difference between a cooling water outlet temperature and a chilled water outlet temperature.

When evaluating the performance of a centrifugal chiller, if the evaluation is performed for each collection of data obtained at similar operating points of a compressor, high evaluation accuracy can be expected. However, calculating an operating point of the compressor involves a complicated calculation process, which is not practical. For example, although an operating point of the compressor is expressed with a flow-rate variable and a pressure variable, the calculation process of the flow-rate variable and the pressure variable is not easy and requires an enormous amount of processing and time. In light of this, the grouping is performed using the load factor related to the flow-rate variable or the difference between the cooling water outlet temperature and the chilled water outlet temperature so that the data obtained at similar operating points of the compressor can be readily classified into groups, thereby achieving enhanced evaluation accuracy.

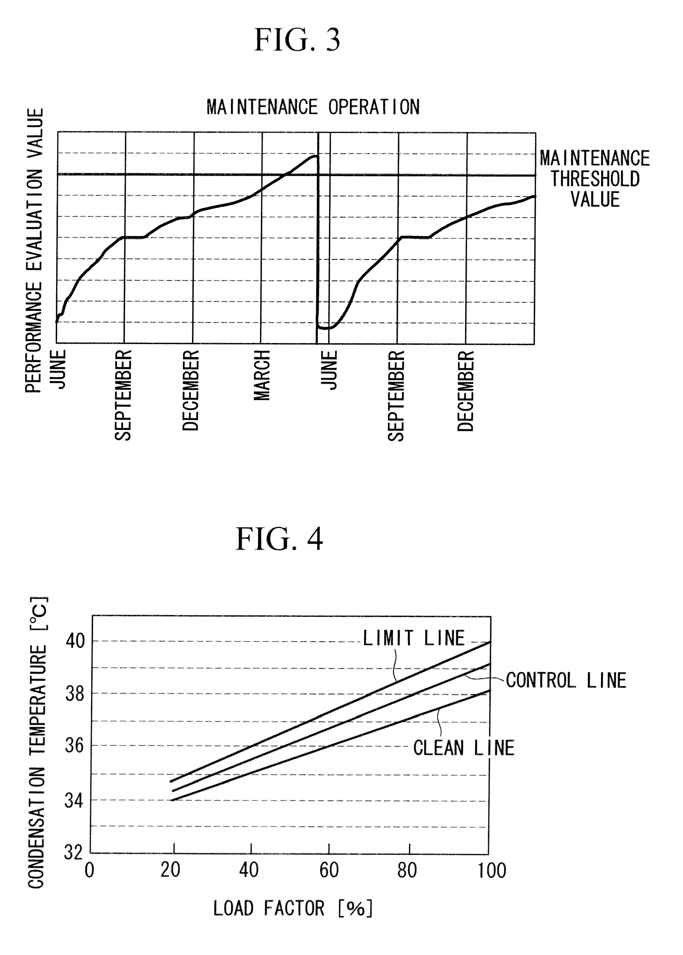

For example, Fig. 4 shows an example of how performance deterioration occurs in a centrifugal chiller. In Fig. 4, the abscissa denotes a load factor (%) of the centrifugal chiller, the ordinate denotes a condensation temperature (°C), the clean line denotes a condensation-temperature-versus-load-factor characteristic when a condenser is clean and not deteriorated, the control line denotes a condensation-temperature-versus-load-factor characteristic when maintenance is required due to dust or the like accumulated in the condenser, and the limit line denotes a condensation-temperature-versus-load-factor characteristic when the operation of the centrifugal chiller needs to be stopped. It is apparent from Fig. 4 that the condensation temperature at which maintenance is required varies depending on the load factor of the centrifugal chiller. Since the width between the clean line and the control line decreases with decreasing load factor of the centrifugal chiller, it is apparent that the effect a condensation temperature measurement error has on the evaluation of performance deterioration increases with decreasing load factor of the centrifugal chiller. Therefore, for example, the performance evaluation is performed on the basis of operating data acquired in an operating condition corresponding to a high load factor at which a measurement error in the condensation temperature does not have a prominent effect on the evaluation of performance deterioration, whereby performance deterioration of the condenser can be detected with higher accuracy.

In the aforementioned performance evaluation device for a centrifugal chiller, the reference evaluation value may be a value that is smoothed by using the predetermined calculation method.

Using such a smoothed value also for the reference evaluation value can reduce an adverse effect on the accuracy of performance evaluation caused by fluctuations in data occurring during a transitional period.

In the aforementioned performance evaluation device for a centrifugal chiller, the evaluation unit may integrate a difference between the evaluated value and the reference evaluation value and perform the performance evaluation using the integrated value.

The aforementioned performance evaluation device for a centrifugal chiller may further include a display unit that displays a performance evaluation result obtained by the evaluation unit.

With the display unit provided, the evaluation result obtained by the evaluation unit can be provided to the user.

The aforementioned performance evaluation device for a centrifugal chiller may be installed in a control panel of a centrifugal chiller.

For example, if the performance evaluation is to be performed in a device installed at a different location remote from the centrifugal chiller, operating data obtained in the centrifugal chiller must be sent to the device in real time via a communication medium or the like. On the other hand, the control panel of the centrifugal chiller constantly receives operating data for controlling the centrifugal chiller; therefore, by equipping the control panel with a performance evaluating function, the performance of the centrifugal chiller can be evaluated by using the operating data used for the control. Consequently, the troublesome data communication mentioned above becomes unnecessary.

The present invention achieves the advantage of having the ability to enhance the accuracy in performance evaluation of a centrifugal chiller.

BRIEF DESCRIPTION OF THE SEVERAL VIEWS OF THE DRAWINGS

Fig. 1 is a diagram showing a schematic configuration of a centrifugal chiller;

Fig. 2 is a functional block diagram showing, in expanded form, functions included in a control panel in a case where a performance evaluation device for a centrifugal chiller according to an embodiment of the present invention is installed in the control panel;

Fig. 3 is a diagram showing a display example; and

Fig. 4 is a diagram showing an example of how performance deterioration occurs in a centrifugal chiller.

**EP 2 426 433 A2**

DETAILED DESCRIPTION OF THE INVENTION

A performance evaluation device for a centrifugal chiller according to an embodiment of the present invention will be described below with reference to the drawings.

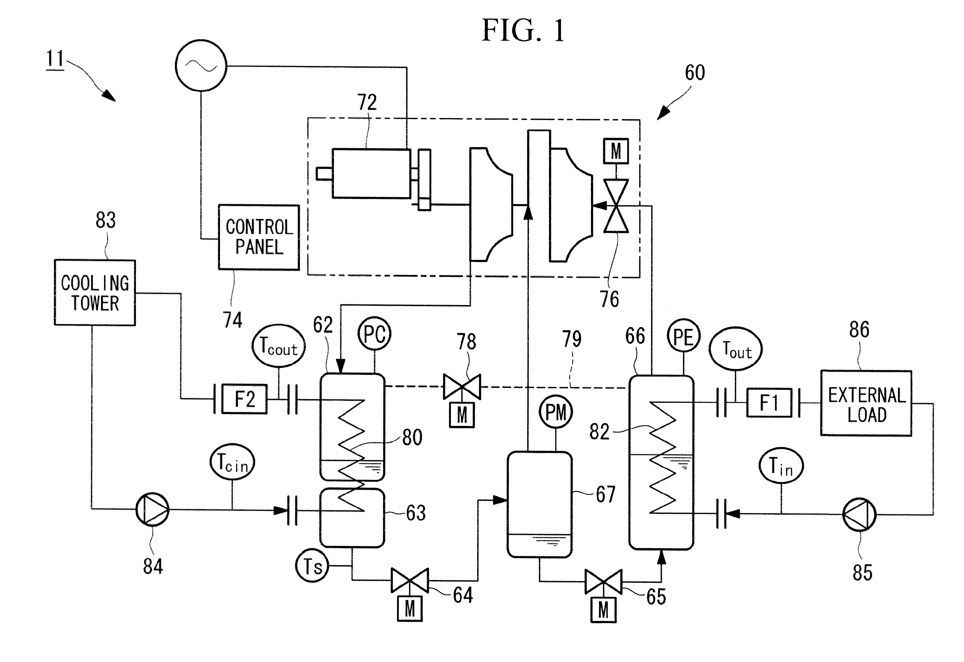

First, the configuration of a centrifugal chiller to which the performance evaluation device for a centrifugal chiller is applied will be described with reference to Fig. 1. Fig. 1 illustrates a general configuration of the centrifugal chiller.

A centrifugal chiller 11 applies cooling energy to a chilled water to be supplied to an external load 86, such as an air conditioner or a fan coil. The centrifugal chiller 11 includes a turbo compressor 60 that compresses a refrigerant, a condenser 62 that condenses the high-temperature, high-pressure gaseous refrigerant compressed by the turbo compressor 60, a sub-cooler 63 that supercools the liquid refrigerant condensed by the condenser 62, a high-pressure expansion valve 64 that expands the liquid refrigerant from the sub-cooler 63, an intercooler 67 connected to the high-pressure expansion valve 64 and to an intermediate stage of the turbo compressor 60 and a low-pressure expansion valve 65, and an evaporator 66 that evaporates the liquid refrigerant expanded by the low-pressure expansion valve 65.

The turbo compressor 60 is a two-stage centrifugal compressor and is a fixed-speed device that is driven at a fixed rotation speed. Although a fixed-speed device is shown as an example in Fig. 1, a turbo compressor whose rotation speed is variably controlled by an inverter may be used as an alternative. A refrigerant intake port of the turbo compressor 60 is provided with an inlet guide vane (referred to as "IGV" hereinafter) 76 that controls the flow rate of refrigerant to be taken in so as to allow for capacity control of the centrifugal chiller 11.

The condenser 62 is provided with a condensed-refrigerant pressure sensor PC for measuring the condensed-refrigerant pressure. The sub-cooler 63 is provided downstream of the condenser 62, as viewed in the flowing direction of the refrigerant, so as to supercool the condensed refrigerant. A temperature sensor Ts that measures the temperature of the supercooled refrigerant is provided immediately downstream of the sub-cooler 63, as viewed in the flowing direction of the refrigerant.

A cooling water pipe 80 for cooling the condenser 62 and the sub-cooler 63 is disposed therein. The cooling water pipe 80 is connected to a cooling tower 83 so that a cooling water circulates between the condenser 62, the cooling tower 83, and the sub-cooler 63 via the cooling water pipe 80. The circulating cooling water absorbs condensed heat (exhaust heat) from the refrigerant in the condenser 62 and dissipates the heat at the cooling tower 83 before it is sent again to the sub-cooler 63. The heat is dissipated at the cooling tower 83 by performing heat exchange with the ambient air. In this manner, the cooling tower 83 is configured to remove the exhaust heat released when the refrigerant is condensed in the condenser 62. The cooling water flowing through the cooling water pipe 80 is pressure-fed by a cooling water pump 84 disposed in the cooling water pipe 80. The cooling water pump 84 is driven by a cooling water-pump inverter motor (not shown). Thus, by making the rotation speed variable, the output flow rate of the cooling water pump 84 can be variably controlled.

A temperature sensor Tcin disposed in the cooling water pipe 80 at a position near an inlet of the sub-cooler 63 measures the cooling water inlet temperature, a temperature sensor Tcout provided in the cooling water pipe 80 at a position near an outlet of the condenser 62 measures the cooling water outlet temperature, and a flowmeter F2 disposed in the cooling water pipe 80 measures the cooling water flow rate.

The intercooler 67 is provided with a pressure sensor PM for measuring the intermediate pressure.

The evaporator 66 is provided with a pressure sensor PE for measuring the evaporation pressure. Heat absorption is performed in the evaporator 66 so as to obtain a chilled water with a rated temperature (of, for example, 7°C). Specifically, the chilled water flowing through a chilled water pipe 82 fitted in the evaporator 66 is cooled by surrendering its heat to the refrigerant. The chilled water flowing through the chilled water pipe 82 is pressure-fed by a chilled water pump 85 disposed in the chilled water pipe 82. The chilled water pump 85 is driven by a chilled water inverter motor (not shown). Thus, by making the rotation speed variable, the output flow rate of the chilled water pump 85 can be variably controlled.

A temperature sensor Tin disposed in the chilled water pipe 82 at a position near an inlet of the evaporator 66 measures the chilled water inlet temperature, a temperature sensor Tout provided in the chilled water pipe 82 at a position near an outlet of the evaporator 66 measures the chilled water outlet temperature, and a flowmeter F1 disposed in the chilled water pipe 82 measures the chilled water flow rate.

A hot-gas bypass pipe 79 is provided between a gas-phase section of the condenser 62 and a gas-phase section of the evaporator 66. A hot-gas bypass valve 78 for controlling the flow rate of refrigerant flowing through the hot-gas bypass pipe 79 is provided. By adjusting the hot-gas bypass flow rate using the hot-gas bypass valve 78, capacity control in an extremely small region that is not sufficiently controlled using only the IGV 76 is possible.

In Fig. 1, the measured values obtained by the various sensors, such as the pressure sensor PC, are sent to a control panel 74. The control panel 74 controls the degree of valve opening of the IGV 76 and the hot-gas bypass valve 78.

In the centrifugal chiller 11 shown in Fig. 1, although the condenser 62 and the sub-cooler 63 are provided so as to heat the cooling water, whose heat is dissipated to the outside at the cooling tower 83, by performing heat exchange between the refrigerant and the cooling water, an air-heat exchanger, for example, may be disposed in place of the condenser 62 and the sub-cooler 63 such that heat exchange is performed between the ambient air and the refrigerant in the air-heat exchanger. The centrifugal chiller 11 is not limited to the above-described type having only a cooling function, and may be, for example, a type having only a heating function or a type having both cooling and heating functions. The medium that is used to exchange heat with the refrigerant may be water or air.

Next, performance evaluation of a centrifugal chiller performed in the control panel 74 included in the above-described centrifugal chiller 11 will be described with reference to the drawings.

The control panel 74 is constituted of, for example, a central processing unit (CPU) (not shown), a random access memory (RAM), and a computer-readable storage medium. A series of processes for achieving various functions, to be described below, is stored in, for example, the storage medium in a program format; the CPU loads the program into the RAM or the like and performs information processing and calculation so as to achieve the various functions, to be described below.

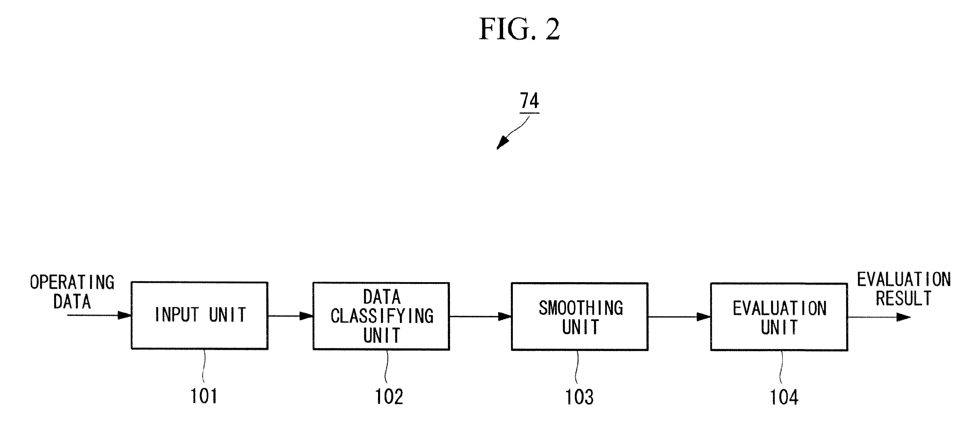

Fig. 2 is a functional block diagram showing, in expanded form, the functions included in the control panel 74. As shown in Fig. 2, the control panel 74 includes an input unit 101, a data classifying unit 102, a smoothing unit 103, and an evaluation unit 104.

The input unit 101 is an interface that receives operating data of the centrifugal chiller 11. Examples of operating data include the cooling water outlet temperature measured by the temperature sensor Tcout, the cooling water inlet temperature measured by the temperature sensor Tcin, the chilled water outlet temperature measured by the temperature sensor Tout, the chilled water inlet temperature measured by the temperature sensor Tin, the chilled water flow rate measured by the flowmeter F1, and the cooling water flow rate measured by the flowmeter F2.

The data classifying unit 102 acquires evaluated data to be subjected to performance evaluation from the operating data received from the input unit 101 and classifies the evaluated data into multiple groups on the basis of preset classifying conditions. The evaluated data may be data directly extracted from the operating data or may be data calculated by substituting the operating data into a predetermined arithmetic equation.

In detail, the data classifying unit 102 stores information about the evaluated data to be subjected to performance evaluation and the classifying conditions. An example of information about the evaluated data is the condensation temperature, and examples of classifying conditions include five classifying conditions, that is, a load factor ranging between 0% and 20%, a load factor ranging between 20% and 40%, a load factor ranging between 40% and 60%, a load factor ranging between 60% and 80%, and a load factor ranging between 80% and 100%. The data classifying unit 102 extracts the condensation temperature from the operating data received from the input unit 101 and distributes the data to the corresponding group in accordance with the load factor when the extracted condensation temperature is acquired.

For each group classified by the data classifying unit 102, the smoothing unit 103 smoothes the evaluated data using a predetermined calculation method set in advance so as to obtain an evaluated value. In detail, the smoothing unit 103 performs common smoothing, such as first-order lag processing or time averaging, on multiple evaluated data acquired within a predetermined time period or a predetermined number of evaluated data as a single collection of data in a time-series manner so as to obtain an evaluated value $Km_i$ ($i$ = 1, 2, 3, ...).

The evaluation unit 104 performs performance evaluation for each group by using the evaluated value $Km_i$ calculated by the smoothing unit 103 and a preset reference evaluation value $KC_i$. In detail, the evaluation unit 104 performs a calculation based on the following equation (1) so as to acquire a performance evaluation value.

$$T = \Sigma \left| KC_i - Km_i \right| \quad (1)$$

In the above equation (1), $T$ denotes the performance evaluation value, $KC_i$ denotes the reference evaluation value, and $Km_i$ denotes the evaluated value. The reference evaluation value $KC_i$ may be a value set in advance for each group or may be calculated from the operating data received from the input unit 101. If the reference evaluation value is to be calculated from the operating data, multiple reference evaluation values within a predetermined time period or a predetermined number of reference evaluation values may be smoothed by a method similar to the aforementioned smoothing method used in the smoothing unit 103, and the performance evaluation value may be obtained by using the smoothed reference evaluation values.

The integration intervals for the performance evaluation value can be set in a freely-chosen manner depending on the purpose of evaluation, for example, minutes, hours, days, weeks, months, seasons, years, etc. For example, when determining whether control is appropriate, relatively short intervals, such as minutes or hours, may be set as the integration intervals, whereas, when determining whether or not maintenance is necessary, relatively long intervals, such as days, weeks, or months, may be set as the integration intervals.

The performance evaluation value calculated by the evaluation unit 104 is sent to a monitoring device (not shown) of a heat source system via a communication medium so as to be displayed on a monitor included in the monitoring device. Thus, the user can check the performance evaluation value T displayed on the monitor of the monitoring device so as to ascertain the performance of the centrifugal chiller.

Instead of directly displaying the performance evaluation value T calculated by the evaluation unit 104, the following alternative method, for example, may be used as an alternative display example.

For example, the evaluation unit 104 or the monitoring device may determine whether or not the performance evaluation value T exceeds a predetermined maintenance threshold value set in advance, and if it is determined that the performance evaluation value T exceeds the maintenance threshold value, a message urging that maintenance be carried out may be displayed.

As shown in Fig. 3, the statistics of the maintenance threshold value and the performance evaluation value may be shown in a time-series manner. Hence, the current status of the centrifugal chiller relative to a maintenance timing can be shown in a more easily understandable manner. In addition, a time or operation in which the performance tends to deteriorate can be shown. For example, it is apparent from the display example in Fig. 3 that the degree of performance deterioration is relatively large in the summer from June to September, whereas the degree of performance deterioration is relatively small in the winter from November to February.

Furthermore, when the performance evaluation value T exceeds the maintenance threshold value, the cost incurred if the operation is continued without performing maintenance and the cost incurred if the operation is terminated for performing maintenance may be displayed in comparison with each other.

As described above, with the performance evaluation device for a centrifugal chiller according to this embodiment, the evaluated data is classified into groups on the basis of the load factor, and the performance evaluation is performed for each group, thereby allowing for performance evaluation for each collection of evaluated values that have the same trends. Furthermore, even in a transitional period in which the load factor varies, the use of the evaluated value, obtained by smoothing the evaluated data, for performing the performance evaluation can avoid reduced accuracy in the performance evaluation caused by fluctuations in the operating data occurring due to the variation of the load factor.

In the above embodiment, the evaluation unit 104 integrates the difference between the evaluated value and the reference evaluation value and performs the performance evaluation by using this integrated value. Alternatively or additionally, for example, the performance evaluation may be performed using a rate of change $R_1$ of an integrated value T, as shown in equation (2), or may be performed using an average value $T_{avg}$ of the integrated value T, as shown in equation (3).

$$R_1 = |T_{1+1} - T_1| \qquad (2)$$

$$T_{avg} = (\Sigma |Kc_i - Km_i|)/\Delta t_i \qquad (3)$$

In equation (3), $\Delta t_i$ denotes an operating time corresponding to detection of the evaluated data of the corresponding group within a predetermined period.

By using multiple evaluation methods in this manner, the centrifugal chiller can be evaluated from various aspects. For example, with the evaluation method based on the above equation (1), since the difference between the evaluated value and the reference evaluation value is accumulated, it is possible to ascertain how much the centrifugal chiller has deteriorated (for example, how much dust has accumulated in the condenser). With the evaluation method based on the above equation (2), it is possible to ascertain the degree of change in the deterioration of the centrifugal chiller since the resultant difference obtained from equation (1) was previously checked.

Although this embodiment is described as being applied to a case where the load factor is used as an operating condition for classifying data into groups, the grouping may alternatively be performed on the basis of, for example, the difference between the cooling water outlet temperature and the chilled water outlet temperature.

The performance evaluation device for a centrifugal chiller according to this embodiment is also capable of evaluating the performance of auxiliary equipment, such as the chilled water pump 85, the cooling water pump 84, and the cooling tower 83.

For example, when evaluating the performance of the cooling tower 83, the evaluation is performed by using the difference between the cooling water outlet temperature and the cooling water inlet temperature as the evaluated value and using the difference between the cooling water outlet temperature and the cooling water inlet temperature during a normal state (e.g., the difference between the cooling water outlet temperature and the cooling water inlet temperature immediately after maintenance) as the reference evaluation value.

In this embodiment, although the control panel 74 is equipped with the function of the performance evaluation device for a centrifugal chiller, the performance evaluation device may be used as a device that is independent of a centrifugal chiller or may be built into a monitoring device that monitors an entire heat source system equipped with multiple centrifugal chillers.

**Claims**

1. A performance evaluation device for a centrifugal chiller (11), **characterized in that** it comprises:

   an input unit (101) that receives operating data of the centrifugal chiller (11);
   a data classifying unit (102) that acquires evaluated data to be subjected to performance evaluation from the operating data received by the input unit (101) and classifies the evaluated data into multiple groups on the basis of a preset classifying condition;
   a smoothing unit (103) that smoothes the evaluated data, for each of the groups classified by the data classifying unit (102), by using a predetermined calculation method set in advance so as to obtain an evaluated value; and
   an evaluation unit (104) that performs performance evaluation for each group by using the evaluated value obtained by the smoothing unit (103) and a reference evaluation value that is set in advance or calculated using the operating data.

2. The performance evaluation device for a centrifugal chiller (11) according to Claim 1, wherein the data classifying unit (102) classifies the evaluated data into the multiple groups in accordance with a load factor or a difference between a cooling water outlet temperature and a chilled water outlet temperature.

3. The performance evaluation device for a centrifugal chiller (11) according to Claim 1 or 2, wherein the reference evaluation value is a value that is smoothed by using the predetermined calculation method.

4. The performance evaluation device for a centrifugal chiller (11) according to any one of Claims 1 to 3, wherein the evaluation unit (104) integrates a difference between the evaluated value and the reference evaluation value and performs the performance evaluation using the integrated value.

5. The performance evaluation device for a centrifugal chiller (11) according to any one of Claims 1 to 4, further comprising a display unit that displays a performance evaluation result obtained by the evaluation unit (104).

6. A centrifugal chiller (11) in which the performance evaluation device for a centrifugal chiller according to any one of Claims 1 to 5 is installed in a control panel (74).

FIG. 1

FIG. 2

74

EP 2 426 433 A2

OPERATING
DATA → INPUT UNIT → DATA CLASSIFYING UNIT → SMOOTHING UNIT → EVALUATION UNIT → EVALUATION RESULT

101              102              103              104

EP 2 426 433 A2

FIG. 3

MAINTENANCE OPERATION

FIG. 4

10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI493567 B